# EUROPEAN PATENT SPECIFICATION

(11) **EP 1 890 014 B1**
(45) Date of publication and mention of the grant of the patent: **05.09.2012**
(21) Application number: 06756703.2
(22) Date of filing: 30.05.2006
(51) Int. Cl.: B01D 53/32, F01N 3/027, F01N 3/20

(54) **EXHAUST EMISSION CONTROL METHOD AND EXHAUST EMISSION CONTROL SYSTEM**
ABGASREINIGUNGSVERFAHREN UND ABGASREINIGUNGSSYSTEM
PROCÉDÉ ET SYSTÈME DE RÉDUCTION DES ÉMISSIONS DE GAZ D'ÉCHAPPEMENT

(30) Priority: 08.06.2005 JP 2005168317
(43) Date of publication of application: 20.02.2008
(73) Proprietor: Isuzu Motors Limited, Tokyo 140-8722 (JP)
(72) Inventor: NAITO, Kenta, Nissin Electric Co., Ltd., Kyoto-shi, Kyoto 6158686 (JP); SENBAYASHI, Satoru, Nissin Electric Co., Ltd., Kyoto-shi, Kyoto 6158686 (JP); HAMADA, Yuichi, Nissin Electric Co., Ltd., Kyoto-shi, Kyoto 6158686 (JP); KASAI, Junichi c/o Isuzu Motors Limited, Shinagawa-ku, Tokyo 1408722 (JP); TAMURA, Yoshinobu, Isuzu Motors Limited, Fujisawa Factory, Fujisawa-shi, Kanagawa 2528501 (JP); GABE, Masashi Isuzu Motors Limited, Fujisawa Fact., Fujisawa-shi, Kanagawa 2528501 (JP)
(74) Representative: WSL Patentanwälte Partnerschaftsgesellschaft
(86) International application number: PCT/JP2006/310707
(87) International publication number: WO 2006/132103

(56) References cited:
- EP-A- 1 460 244
- WO-A1-2004/004869
- JP-A- 63 025 310
- JP-A- 2003 201 824
- JP-A- 2004 216 201
- JP-A- 2004 261 717
- JP-A- 2004 514 820
- US-A1- 2005 063 879

## Description

### FIELD OF THE INVENTION

The present invention relates to exhaust gas purification method and exhaust gas purification systems for exhaust gas from internal combustion engines and the like. In particular it is related to an exhaust gas purification method and exhaust gas purification system that can effectively remove particulate matter ("PM") discharged from a diesel engine.

### DESCRIPTION OF THE RELATED ART

Diesel engines are equipped with many automobiles, particularly large-sized vehicles. In recent years, in particular, there has been a strong desire to reduce the discharge of PM as well as nitrogen oxide, hydrocarbons, carbon monoxide and the like in exhaust gas. Therefore, there is a desire to build technology that will efficiently remove PM in exhaust gas, as well as to develop technology that will fundamentally reduce PM through improving the engine, optimizing the cylinder fuel conditions, and the like. And in order to remove PM in exhaust gas, methods such as using a filter or an electric collector have been developed.

In general, the filters used in the methods using filters are ceramic honeycomb filters, alloy filters, and ceramic fiber filters. However, as time of using passed, the filter becomes clogged by the collected PM and the ventilation resistance increases, and as a result a burden on the engine is heavier. Processing the dry soot (carbon) within PM components is particularly difficult. In order to oxidize the dry soot and remove it by burning, it must heated to no less than 500°C under oxygen rich conditions; this temperature that is enough to remove and oxidize it cannot be reached only by the heat of the exhaust gas generated by the engine. Therefore, methods such as using an electric heater, and methods such as oxidizing and removing PM by burning using oxidized radicals generated from discharge plasma, have been proposed.

However, the problem with using just an electric heater to generate heat is that it deteriorates fuel consumption. In other words, heat is not only used for heating PM but for the whole amount of exhaust gas as well. In the case that oxidized radicals are used, generating the oxidized radicals is inefficient. In addition to the slow oxidation velocity of the oxidized radicals, they are consumed in the reaction with HC components in the exhaust gas. Therefore, the reaction with the PM is inefficient and as a result the consumption of electrical power becomes greater. For example, the power consumption in a small-sized truck becomes equal to that of several kW-class.

Also, in the method of electric collecting, rising of the pressure loss of the filter is repressed with the following electric collector method. By combining a bag filter and an electric collector, and by applying an electrical field to the filtration surface of the bag filter, the PM captured on the surface of a filter is prevented from adhering. The accumulation state is controlled. Then, in order to remove the PM by burning, an electrode is arranged on the insulated straight flow honeycomb, and the PM captured in the honeycomb is eliminated through burning by the flow of electrical current. However, there are two problems with the straight flow honeycomb; because not enough PM is captured and the purification capability is poor, and because not enough electrical current can flow into the captured PM, not enough of the acquired PM can be removed.

Therefore, the development of an exhaust gas purification devices that have sufficient capability in relation to both the PM combustion-removal and the collecting capability of the PM in exhaust gas discharged from diesel engines and the like, has been deemed to be necessary, and various devices have been proposed.

One such example, as described in Japanese Patent Application Kokai Publication No. 2001-132430, is the proposal of a filer removing a combustible matter. In this removing filter, in which an insulating barrier wall that provides capturing pores perforating from the side front side to the background side, the combustible matter (PM) is captured in the capturing pores. In this removing filter, according to the accumulation of combustible matter, short circuit or spark discharge is generated between the electrodes provided by adhesion keeping the electrical insulation on both sides, and electrifying the accumulated matter connected to both electrodes or immediately before being connected to both electrodes, the accumulated matter is eliminated through burning caused by joule heat. And the resistivity between the electrodes is within the range of 0.01 - 100 Ωcm and firmly or intermittently applies the alternating current or direct current of the predetermined voltage (for example, 1200 V or more at 25 °C, 600 V or more at 300 °C).
A similar approach is also described in EP 1 460 244 A2, whereas an apparatus for removing particulates from a gas stream comprising a ceramic monolith filter through which gas may be caused to flow, a plurality of first electrodes for producing atmospheric glow discharges located near to but spaced apart from a first end of the filter, and at least one second counter electrode spaced away from the first electrodes and situated in a location which lies downstream in use from the first electrodes, the electrodes being connected to an AC voltage supply generating an AC voltage in a frequency within the range of 1 kHz to 200 kHz, wherein each first electrode is electrically stabilized by a dedicated impedance element.

However, the method using this removing filter has the following problem: It is regenerated after the purification capability worsens. If a short circuit or spark discharge occurs once, short circuit or spark discharge becomes liable to repeat in that portion and PM cannot be removed by burning in other portions. In this method in which electrical current by a short circuit or spark and the like discharges between the electrodes, a flow of high electrical current occurs.

In another example, as described in Japanese Patent Application Kokai Publication No 2001-173427, a wall-flow-type electric discharge regeneration collecting filter is proposed. This filter provides the discharging electrode having a contact point on surface of the inner wall and arranged parallel with the direction of the exhaust gas flow, while also providing the charging electrode so that it can electrically contact with the soot layer (PM layer) accumulated on the surface of the inner wall. 500 V-AC, for example, is applied between the discharging electrode and the charging electrode. And when the soot is accumulated on the inner wall to grow the layer of accumulated soot, a discharge is generated between the contact point of the discharging electrode and the layer of accumulated soot which contacts the charging electrode and has the same polarity as the charging electrode, and the soot is removed by burning.

In an additional example, as described in Japanese Patent Application Kokai Publication No 2001-221032, a black smoke removal device for a diesel engine is proposed. In the filter of this cross-flow-type, discharging electrodes are arranged in the entrance and the exit of the filter. Also, in the filter of this wall-flow-type, discharging electrodes are arranged on inner walls, or discharging electrodes composed of porous discharging electrode plates which are interposed between an electrode pin inserted in the cell and the adjoining ceramic filter, are provided. The discharging electrodes are arranged in the filter. Voltage is applied through the discharging electrodes, and the accumulated black smoke matter (PM) itself is combusted by an arc discharge to regenerate the filter.

In another example, as described in Japanese Patent Application Kokai Publication No 2004-308569, a PM purifying reactor is proposed. In this purifying reactor, a low-porosity base honeycomb structure is arranged in the upstream and the downstream of a high-porosity base honeycomb structure, while the electrodes are arranged in the upstream and the downstream, and the outer circumference electrodes are arranged in the outer circumference of the downstream honeycomb structure. A direct current voltage of 5 kV or more for instance, is applied to those electrodes. Based on this, a guide channel is formed via the accumulated PM between the electrodes of the upstream and the downstream, and combustion by electric current approximating an arc discharge is generated. The PM is then removed by that burning.

In another example, as described in Japanese Patent Application Kokai Publication No H04-135619, an exhaust gas purification device is proposed. In this exhaust gas purification device, the electrode and the dielectric in which the ends of the intakes protrude to outside, are arranged on both sides of the filter. Voltage of approximately 1-10 kV in non-direct current is applied to the electrodes, and it generates a corona discharge between the dielectric and the layer of accumulated combustible particles (PM) on the intake side of the filter. A part of the excited oxygen and the excited nitrogen oxide in the gas where the corona discharge occurred reaches the layer of accumulated particles, thereby the particles are removed by oxidation.

In these prior art devices that oxidize and remove PM collected on filters and the like based on electrically processing, the electrical conductivity is presumed to be high because the main component of the PM is carbon. And burning through oxidation by a short circuit or arc discharge dependent on PM collected between the electrodes, through the passage of electrical current through the PM itself, in other words, through the production of joule heal generated by the electric current flowing in the PM, is being strived for.

However, the inventors have conducted the measurement of the electric resistance and the experiments of the combustion of PM discharged from an actual diesel engine, and many experiments related to the relationship between the accumulation state of PM to the insulating filter, the voltage and the electrical current applied to electrode pairs arranged on the surface of the insulating filter. And from deeply examining the results of these experiments, the following knowledge has been gained.

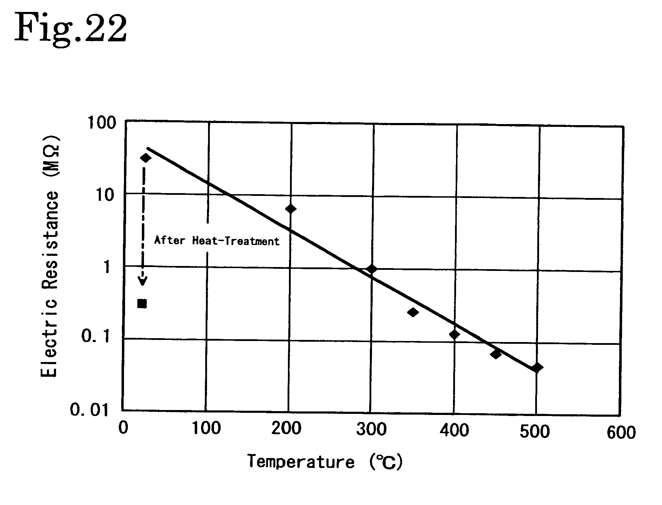

First of all, related to the electrical resistance of PM, from the relationship between temperature and electrical resistance, as shown in Fig. 22, at low temperature the electric resistance of PM is higher than that expected and the electrical conductivity is poor. This is thought to be due from the bad influence of soluble organic components ("SOF component") of PM. For this reason, it is difficult to heat by current injection at a low voltage. On the other hand, the electrical resistance declines at high temperature where SOF component is volatile. Accordingly, PM combustion-removal technology that can correspond to the change of electrical resistance in the wide range is required.

In addition, the electrical resistance of PM discharged from a diesel engine is high at a comparatively wide temperature range, due to the influence of SOF components. Therefore, at the foundation of the premise of a low electrical resistance of PM as in the methods of the prior art, if joule heat is to be generated by passing electrical current into all of the PM between the electrodes on the accumulated PM side by such as a short circuit between the electrodes, the high voltage and a large current is required. Accordingly, in the real machine, because a short circuit, a spark discharge, or an arc discharge is generated, the removal of PM by oxidation is extremely difficult. Also if a spark discharge or an arc discharge and the like is used, the spark discharge or the arc discharge harms and damages the filter.

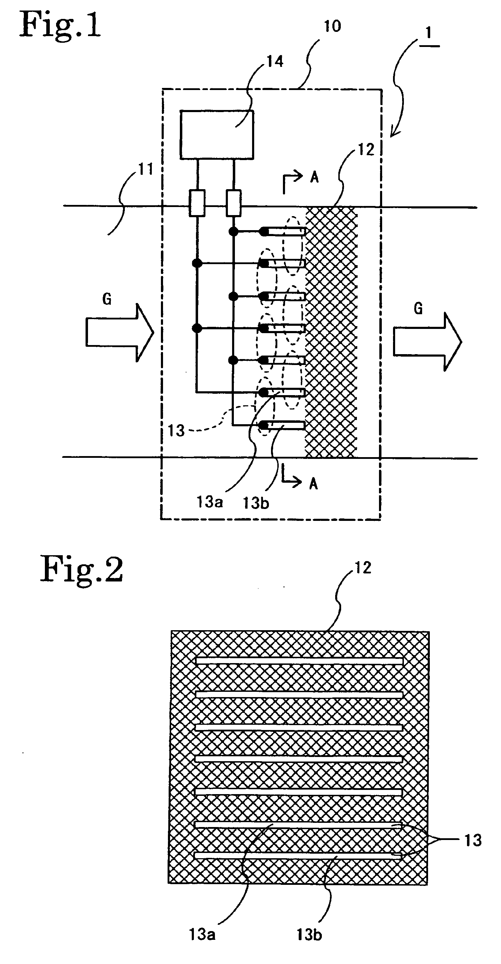

Additionally, the following important knowledge was gained from the results of the measurement of the relationship with the current I and the voltage V between both electrodes 13, and the PM state of capture as well as accumulation, in a device in which the electrode pairs 13 comprising primary electrode 13a and secondary electrode 13b is arranged in the vicinity to the surface of an insulating filter 12 as shown in Fig. 1 and Fig. 2.

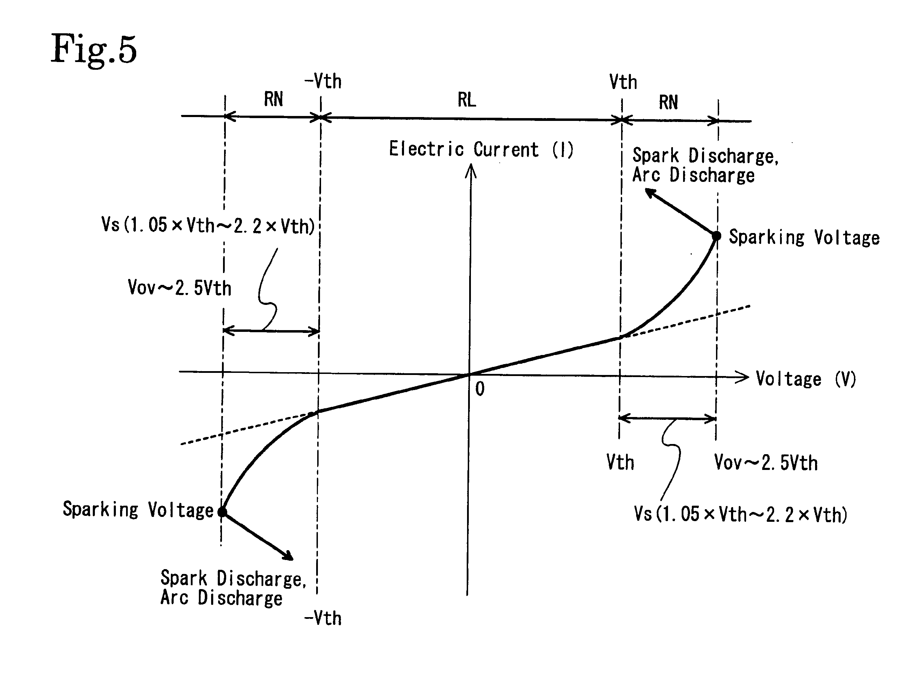

In the state in which the amount of PM accumulated on the surface of the insulating filter 12 is small, electrical current does not flow between electrode pair 13. However, according as the accumulation of PM progresses, the impedance between both electrodes 13 declines, and when the accumulation of PM exceeds a limit, electrical currant I becomes able to flow through electrode pair 14. The relationship between the voltage V and the electrical currant I is that as shown in Fig. 5. As shown in Fig. 5, the electrical currant I is in a proportional relationship that follows Ohm's Law while voltage V is low, and changes linearly. However, once a specified voltage Vth (or -Vth) (the first point of inflection) is exceeded, the proportional relationship collapses, and the increase of the amount of current I to the voltage V becomes dramatically. From this specified voltage Vth (or -Vth), the relationship between the voltage V and the electric current I becomes to change considerably.

And when the voltage of the direct current electric power or the voltage peak value of the alternating current reaches into the non-linear region RN of -Vth or less, or Vth or above, it generates a microscopic luminescent discharge that repeats generation and extinction randomly in time and space between the electrode pairs 13. This microscopic luminescent discharge is the microscopic luminescent discharge that an electric current flows along the surface and generates joule heat when there is an electric potential difference on the surface of the insulation. This discharge is a partial discharge referred to as scintillation, which arises by a deficient of the electric field, and differs from a short circuit or an arc spark and the like in which a large electrical current flows between the electrode pairs.

This microscopic luminescent discharge is a well-known phenomenon related to tracking which can be a cause of fire in sockets and the like in electrical appliances and which also causes the rupture of insulation by the dampness and the contamination on the surface of an organic insulation used in electrical appliances. In this tracking, a portion of the insulation is broken to produce oxidation products by the microscopic luminescent discharge. As a result, the electric field concentrated on large conductive oxidation products, and carbides are generated around there. These carbides grow to extend between the electrodes, and eventually short circuit is generated. This leads to a total path rupture and tracking is occurred.

On the other hand, in the case that the PM accumulated on the surface of the filter, the accumulate itself is carbide. And PM is removed through burning by a microscopic luminescent discharge, the resistance value in that region becomes higher and the microscopic luminescent discharge moves to another place. These processes are repeated henceforth. Therefore, unlike tracking, it does not lead to total path rupture, and the continuing removal of PM by burning is achieved. As a result, the clogging of an insulating filter 12 can be dissolved with small consumption of electric power.

On the other hand, a microscopic luminescent discharge is not generated on the surface of an insulating filter 12 when the voltage V of direct current power or the voltage peak value of the voltage Vh of the alternating current power is in the linear region RL between -Vth and Vth. In this region RL, when an attempt is made to dissolve the clogging in an insulating filter 12 from the passage of electric current, a large amount of electric power is consumed.

Accordingly, the voltage between the electrode pairs is turned to be the voltage in a specified voltage range, as this result, it is possible to form a microscopic luminescent discharge that repeats generation and extinction randomly in time and space on the surface of an insulating filter on which PM has accumulated, and through this microscopic luminescent discharge it is also possible to remove the collected PM by oxidizing and burning. And in order to remove the accumulated PM in an insulating filter 12 by burning with consuming a small amount of electric power, the establishment of the voltage V applied between the electrode pair 13 in response to things such as the distance between electrode pair 13 is particularly important.
Patent Document: Japanese Patent Application Kokai Publication No 2001-132430
Patent Document: Japanese Patent Application Kokai Publication No 2001-173427
Patent Document: Japanese Patent Application Kokai Publication No 2001-221032
Patent Document: Japanese Patent Application Kokai Publication No 2004-308569
Patent Document: Japanese Patent Application Kokai Publication No H04-135619

### SUMMARY OF THE INVENTION

The object of the present invention is to solve the problems using the above-mentioned knowledge that has been gained; the object is to submit an exhaust gas purification method and exhaust gas purification system that, by using a microscopic luminescent discharge that repeats generation and extinction randomly in time and space on the surface of the insulating filter, thereby enabling the removal of collected PM by burning with consuming a small amount of power, enabling the collecting efficiency and the efficiency of removing PM by burning PM in exhaust gas from a diesel engine or another combustion device to become high.

The exhaust gas purifying method to achieve the above-mentioned object has the following characteristics; one or more pairs of electrodes are arranged on the surface or in the vicinity of the surface of an insulating capturing member that captures particulate matter in exhaust gas, according as the amount of the particulate matter captured on the surface of the insulating capturing member increases, a predetermined voltage is applied so that it generates a microscopic luminescent discharge that repeats generation and extinction randomly in time and space between the electrode pairs, and the microscopic luminescent discharge generated by this application of the specified voltage removes the particulate matter captured in the insulating capturing member by burning.

When this predetermined voltage is applied, the voltage used may be that of direct current, alternating current, high frequency, or pulse but not as that of short circuits and spark and arc discharges and the like that have a large voltage such as that in which an electric current entirely flows between the electrode pairs, the voltage is that which generates a microscopic luminescent discharge that repeats generation and extinction randomly in time and space between the electrode pairs, in other words, the portion discharge known as scintillation.

The following is a more detailed description of the microscopic luminescent discharge. The PM (which has more conductivity than the applicable insulator) adheres or accumulates on the insulation surface, but, if that adhesion (accumulation) is examined microscopically, it is uneven in the space. Therefore if there is an electric potential difference on the insulation surface, a spatial irregularity in the electric field that is formed in the PM adhesion (accumulation) layer arises. When the electric potential difference on the insulation surface exceeds the predetermined value, some parts reach to the sufficient electric field intensity enough to form plasma locally. The above-described microscopic luminescent discharge is the discharge formed in this manner.

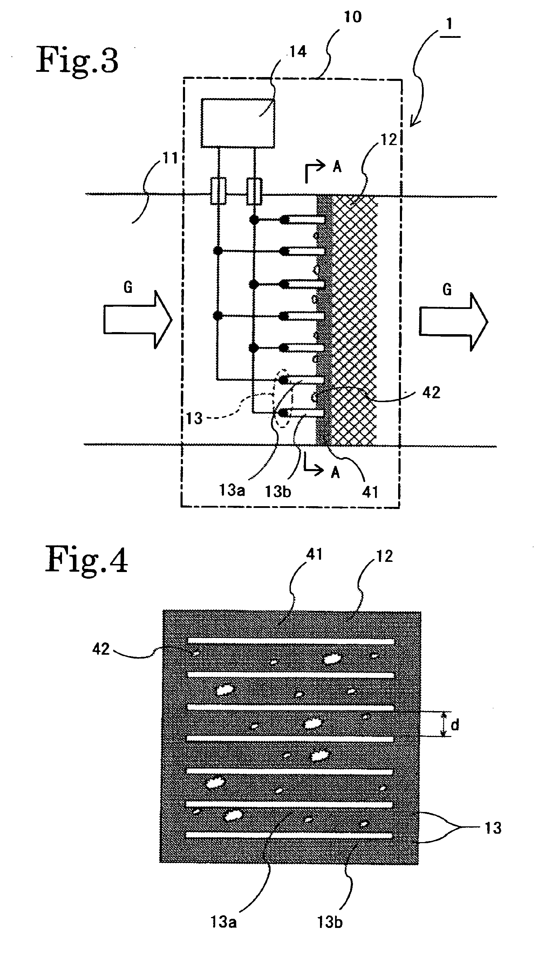

The PM adhesion (accumulation) layer is partially heated by the microscopic luminescent discharge, and that a portion of PM is removed by burning. The insulation of the portion of PM removed by burning becomes higher again and a spatial irregularity in the electric field forms newly, prompting the formation of a microscopic luminescent discharge in another part. In this way, the microscopic luminescent discharge is the phenomenon differing from the phenomenon such as short circuit or arch in which a large electric current flows in between the electrode pairs. The microscopic luminescent discharge is not of a shape which bridges the pair of electrodes, but as shown in Fig. 4, "flickers" or "glimmers" like a shining star in the night sky, generated in one section between the electrode pairs. Additionally, the part in which the microscopic luminescent discharge is generated moves randomly.

The particulate matter (PM) at the sections where the microscopic luminescent discharge arises, is removed through burning by joule heat generated by the microscopic luminescent discharge. Accordingly, the specified voltage in the electrode pairs is applied constantly or temporarily, and then the microscopic luminescent discharge is generated according to the progression of the accumulation of the particulate matter, and the particulate matter is removed by burning. From this phenomenon, capturing and regeneration is temporally and spatially repeated in random. And as a whole, capturing and regeneration continuously occurs. Also, if the temperature of the exhaust gas is high, the microscopic luminescent discharge or the part heated by the microscopic luminescent discharge becomes an ignition source, and the adjacent particulate matter is combusted. The burning then spreads, and the surrounding particulate matter is removed by burning.

Also, it is possible to apply an insulating filter that captures particulate matter and allows passing the exhaust gas including particulate matter, as the insulating capturing member that captures the particulate matter (PM) in exhaust gas. In addition, it may also be a collector electrode having insulation on the surface and using the electrostatic force that electrically captures particulate matter electrified by things like a corona discharge. The point is that it is preferable for it to be a capturing member that has electric insulation in which electric power applied to electrode pairs does not flow to the capturing member side.

Also the exhaust gas purification system that will achieve the above-mentioned object is an exhaust gas purification system that comprises an insulating capturing member that captures particulate matter in exhaust gas; at least one electrode pair arranged on the surface or in the vicinity of the surface of the insulating capturing member; and a voltage applying device that applies predetermined voltage between the electrode pairs, wherein the voltage applying device applies predetermined voltage that generates a microscopic luminescent discharge that randomly repeats generation and extinction randomly in time and space on the surface of the insulating capturing member according as the accumulated amount of the particulate matter captured on the surface of the insulating capturing member increases.

And, in the above-mentioned exhaust gas purification system, it is possible to configure the insulating capturing member with the insulating filter through which exhaust gas including particulate matter passes and which captures particulate matter.

In addition, in the above-mentioned exhaust gas purification system, the predetermined voltage is that of the voltage in the region, wherein the electrical current voltage between the electrode pairs is non-linear.

In other words, as shown in Fig. 5, in the state in which the amount of PM accumulated on the surface of the insulting capturing member is small, electrical current does not flow between the electrode pairs. When the accumulation of PM progresses, the impedance between both electrodes declines, and when it transcends its limit, electrical current flows in between the electrode pair. The relationship between the electrical current and the voltage that are applied between the electrode pairs is in a proportional relationship in accordance with Ohm's Law and changes linearly, during the voltage is low. However, once the voltage exceeds a specified voltage (the first point of inflection) Vth (or -Vth), the proportional relationship collapses, and the amount of electrical current with respect to the voltage increases dramatically. The voltage of the direct currant electric power or the voltage peak value of alternating current electric power that is applied to electrode pairs is established at a specified voltage of Vth or more (or -Vth or less). A microscopic luminescent discharge is formed through the applied voltage, and the discharge is repetitiously generated and extinguished randomly in time and space between the electrode pairs.

More specifically, the specified voltage Vth, which was determined experimentally, and if the distance between the electrode pair is d cm, it is within the range value of 450 × d V to 900 × d V. This specified voltage Vth or non-linear region is dependent on the shape of electrode and on the electric resistance of the PM that changes based on the type of diesel engine and the engine driving condition. Accordingly, as gained from the result of the experiment, it is possible to establish the optimum voltage that is applied to electrode pairs.

When the applied voltage is too large, rather than a microscopic luminescent discharge, a short circuit, a spark, or an arch discharge (which may be generated in the case of the intervention of air discharge) occurs frequently, damaging the insulating filter, and creating the possibility of harming the electric power supply device from overcurrent. Therefore, the absolute value of direct current electric power voltage or the absolute value of alternating current electric power voltage applied to electrode pairs is within the range of 1.05 to 2.2 times the specified voltage Vth.

And it is preferable that the lower limit of the specified voltage Vs that is applied is within the range of 450 × d V to 900 × d V and the upper limit of that is within the range of 1000 × d V to 1800 × d V, wherein the distance between the electrode pairs is taken as d cm. Also, as gained from the result of the experiment, it is even more preferable for the Vs to be within the range of 650 × d V to 1800 × d V.

In the above-mentioned exhaust gas purification system, charging means are arranged in the upstream side of the insulating capturing member in order to charge the particulates in exhaust gas. As for the charging means, it is possible to use charging means that use corona discharge, barrier discharge, pulse discharge, radiation source, or electron rays and the like.

In the above-mentioned exhaust gas purification system, the insulating capturing member is formed with a ceramic fiber filter. From the point of view of safety related to its influence on living organisms, it is preferable that materials of SiO2 system, SiO2 - MgO system, SiO2 - MgO - CaO system be used in this ceramic fiber filter. Also, as for the fiber diameter, it is preferable that something from 3 or more to 100 or less micrometer (µ m) is used.

In the above-mentioned exhaust gas purification system, the oxidation catalyst is carried on the insulating capturing member. Or, the oxidation catalyst is arranged on the upstream side or downstream side of the insulating capturing member. From these configurations, the removal by oxidizing, via the catalyst effect of the oxidation catalyst, of vaporized hydrocarbon ("HC") or vaporized soluble organic components that are difficult for the insulating capturing member to collect, becomes possible.

The present invention of the exhaust gas purification method and exhaust gas purification system uses a microscopic luminescent discharge that repeats generation and extinction randomly in time and space on the surface of the insulation, and can sufficiently remove the collected PM by burning, with consuming a small amount of electric power. Accordingly, the collecting efficiency of PM in exhaust gas from things such as a diesel engine, and the removal efficiency can be enhanced.

### BRIEF DESCRIPTIONS OF THE DRAWINGS

Fig. 1 is an illustration showing a schematic view of the configuration of the exhaust gas purification system of the first embodiment related to the present invention.
Fig. 2 is an A-A arrow view of Fig. 1.
Fig. 3 is an illustration showing a schematic view of the state in which PM accumulates on the surface of the insulting filter of Fig. 1.
Fig. 4 is an A-A arrow view of Fig. 3.
Fig. 5 is an illustration showing a schematic view of the relationship between voltage and electric current.
Fig. 6 is an illustration showing a schematic view of the configuration of the exhaust gas purification system of the second embodiment related to the present invention.
Fig. 7 is an illustration showing a schematic view of the adhesion state of PM to the insulating filter in the case that charging process had previously been done.
Fig. 8 is an illustration showing a schematic view of the adhesion state of PM to the insulating filter in the case that charging process had not been done.
Fig. 9 is an illustration showing a schematic view of the configuration of the exhaust gas purification system of the third embodiment related to the present invention.
Fig. 10 is an illustration showing the configuration of the electrode pairs of Fig. 9 as seen from above.
Fig. 11 is a cross-section of the bottom part showing the configuration of the insulating filter and electrode pairs of Fig. 9.
Fig. 12 is an illustration showing a schematic view of the configuration of another exhaust gas purification system of the third embodiment related to the present invention.
Fig. 13 is a cross-section of the bottom part showing the configuration of the insulating filter and electrode pairs of Fig. 12.
Fig. 14 is an illustration showing the configuration of the electrode pairs of Fig. 12 as seen from above.
Fig. 15 is a sectional side elevation of the bottom part showing the configuration of the insulating filter and electrode pairs of Fig. 12.
Fig. 16 is an illustration showing another example configuration of the electrode pairs of Fig. 12.
Fig. 17 is an illustration showing a schematic view of the configuration of the experimental device of Embodiment 1.
Fig. 18 is an illustration showing the temporal change of pressure loss of the filter in Embodiment 1.
Fig. 19 is an illustration showing the particles diameter distribution of Embodiment 1.
Fig. 20 is an illustration showing a schematic view of the configuration of the experimental device of Embodiment 2.
Fig. 21 is an enlarged picture of the filter surface of the fiber filter.
Fig. 22 is an illustration showing the relationship between the electrical resistance and the temperature of the particulate matter.

### DETAILED DESCRIPTION OF THE INVENTION

Exhaust gas purification systems of the embodiments related to the present invention will be explained below, while referring to the illustrations and using exhaust gas purification systems wherein the object gas disposed of is diesel engine exhaust gas as an example. In the embodiments below, an insulating filter is used in the insulating capturing member. However, the present invention is not limited to this. The present invention can additionally be adapted to things such as a device, which uses electrostatic force to electrically capture particulate matter that has been charged by a corona spark, for example.

The exhaust gas purification system 1 of the first embodiment related to the present invention is shown in Fig. 1 to Fig. 4. Fig. 1 and Fig. 2 show the state before PM (particulate matter) is accumulated. Fig. 3 and Fig. 4 show the state in which PM 41 is accumulated and a microscopic luminescent discharge 42 is being generated.

This exhaust gas purification system 1 is formed arranging the filter part 10 which is provided with an insulating filter (insulating capturing member) 12, electrode pairs 13, and the power source 14 for a microscopic luminescent discharge, in exhaust gas passage 11 for diesel engines and the like. This insulating filter 12 is arranged in a shape that obstructs the flow of exhaust gas G, in other words, the main flow direction of exhaust-gas G intersects with the surface of insulating filter 12, such that exhaust-gas G passes from the surface to the other side of the insulating filter 12. This insulating filter 12 is formed as a ceramic fiber filter wherein the fiber diameter is from several micrometer (µm) to 100 micrometer (µm), preferably having a vesicle size in the order of several 10 micrometer (µm).

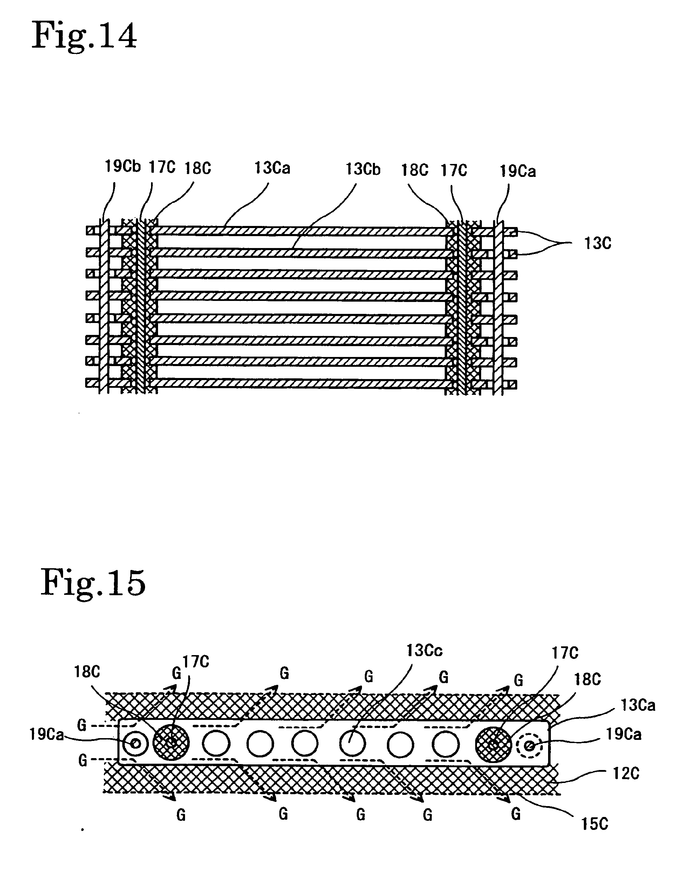

As for this ceramic fiber filter, a variety of things are applicable; however, as shown in Fig. 15, a fiber filter including the ones with fiber diameter of at least 3 micrometer (µm) has an PM removal capability that is particularly favorable. As for the material of the ceramic fiber, if the insulation is of systems such as Al₂O₃ (aluminum oxide) system and SiO2 (silicon oxide) system, multiple things are applicable. However, from the point of view of safety, related to its influence on living organisms, it is preferable that the ceramic fiber has an excellent organic solubility; for example, SiO₂ system (SiO₂ - MgO system, SiO₂ - MgO - CaO system). Yet, it is possible to use an insulating filter other than a ceramic fiber filter, such as, porous ceramic in which the vesicle has a pore diameter of around several micrometer (µm) to 100 micrometer (µm).

Also, at least one pair, in other words, a single or multiple pair of electrode pair 13 comprising a primary electrode 13a and a secondary electrode 13b, as shown in Fig. 1 and Fig. 3, is arranged, on the surface, or in the vicinity of the surface, of the upstream side of insulating filter 12. It is preferable that this electrode pair 13 is contacting the surface of insulating filter 12; however, there may be a small gap between electrode pair 13 and the surface of insulating filter 12. As shown in Fig. 2 and Fig. 4, this electrode pair 13 can be formed with two parallel plates 13a and 13b, or be formed with concentric circles cylinders without edges so that the rate of the regeneration possible area of the filter become larger. And it is also possible to provide a primary electrode 13a and a secondary electrode 13b with a microscopic structure of serrated or comb shape, dispersing the electric field point of concentration in several places, facilitating the generation of a microscopic luminescent discharge. The point is that it is preferable to appropriately arrange the electrode pairs 13 so that a microscopic luminescent discharge can form in a spatially dispersed shape on the surface of insulating filter 12 and various configurations can be applied to the electrode pairs 13.

The electrode pairs 13 are connected to the power source 14 for the microscopic luminescent discharge that is a high voltage electric power supply device. The power source 14 for the microscopic luminescent discharge applies predetermined set voltage Vs to the electrode pairs 13. In order to apply set voltage Vs to the electrode pairs 13, the power source 14 for the microscopic luminescent discharge is a high voltage power source, and any of the following multiple waveforms of the applied voltage are possible, including direct current, alternating current, high frequency, pulse, or rectangular alternating, all of them providing sufficient results.

And, in the present invention, the height of the set voltage Vs applied to the electrode pairs 13 is particularly important. The set voltage Vs is such that in which, according as the amount of accumulated PM 41 captured on the surface of the insulating filter 12 increases, as shown in Fig. 3 and Fig. 4, a microscopic luminescent discharge 42 that repeats generation and extinction randomly in time and space on the surface of the insulating filter 12 is generated. From the application of the set voltage Vs, captured PM 41 is removed through burning by the generated microscopic luminescent discharge 42, thereby dissolving the clogging in the insulting filter 12. The microscopic luminescent discharge is generated locally as a current follows along the surface and generates joule heat when there is a difference in the electric potentials on the surface of the insulating material. The microscopic luminescent discharge is also a partial discharge known as a scintillation that arises from an irregularity in the electric field, differing from a short circuit, an arch discharge, and the like in which a large current flows between the electrode pairs.

The set voltage Vs can be determined experimentally from the electrical characteristics of the accumulated layer of PM 41 accumulated on the surface of the insulating filter 12. In other words, in a state in which there is a small amount of PM 41 accumulating on the surface of the insulting filter 12, electrical current I does not flow between the electrode pairs 13. However, as the accumulation of PM 41 progresses, the impedance between both electrodes 13a, 13b declines, and when it transcends its limit, electrical current I will flow between the electrode pairs 13.

The relationship between the voltage V applied between the electrode pairs 13 and the electric current I is, as shown in Fig. 5, in a proportional relationship and changes linearly, during the voltage V is low (within the linear region RL). However, once a specified voltage Vth (or -Vth) is exceeded, the proportional relationship collapses. When it enters into the non-linear region RN, the amount of current I to the voltage V increases (or decreases) dramatically, and inflects. Direct current electric power voltage Vs or alternating current voltage peak value Vs that is applied to the electrode pairs 13 is set at the specified voltage Vth or higher (or at or less than -Vth), in other words, within the range of non-linear region RN.

If the set voltage Vs becomes too high, rather than a microscopic luminescent discharge, a short circuit or an arch discharge (that may be generated in a form in which spatial discharge interposes) frequently occurs; it may not only increases the amount of power consumption, but also damages the insulating filter and possibly harms the power source from overcurrent. Therefore, absolute range of the set voltage Vs is to be approximately within the range of the specified voltage Vth, for instance, 1.05 × Vth to 2.2 × Vth.

And, corresponding to this, when the distance between the electrode pairs is taken as d cm, the under limit of predetermined voltage Vs is to be within the range of a minimum of 450 × d V to 900 × d V and the upper limit of that is to be within the range of a maximum of 1000 × d V to 1800 × d V. When the set voltage Vs is applied to the electrode pairs 13 and the accumulated layer of PM 41 between the electrode pairs 13 increases to a certain amount, a microscopic luminescent discharge 42 that repeats randomly in time and space will generate and extinguish in the accumulated layer 41 of PM between the electrode pairs 13.

The specified voltage Vth is dependent upon the shape and the space of electrodes 13a, 13b, the electrical resistance R of PM and the like, and because the electrical resistance R of PM fluctuates based on the driving condition of the engine, it should be measured appropriately by experiments to get a specified voltage Vth and determine the set voltage Vs. This specified voltage Vth has been gained experimentally, that is roughly 450 × d (V: volt) to 900 × d (V: volt), when the distance between the electrode pairs is taken as d (cm: centimeter). And the set voltage Vs can be taken as a constant value in the range that includes the entire driving condition of the engine; however, it is preferably to control changing the set voltage Vs according to the driving condition of the engine so that the control is more efficient. If the voltage peak value is the above-mentioned set voltage Vs, then the applied voltage waveform can be any variety of waveforms including direct current, alternating current, pulse, high frequency, pulse, or rectangular alternating voltage, each providing sufficient results.

In the exhaust gas purification system 1, the PM in the exhaust gas is captured and accumulated on or in the vicinity of the surface of insulating filter 12. Due to the progression of the accumulated PM 41, the impedance of the electrode pairs 13, in other words, the impedance between a primary electrode 13a and a secondary electrode 13b declines, and when it transcends the limit, an electrical current begins to flow. Additionally, when the accumulation of PM 41 progresses, a difference in the electric potentials is formed in the accumulated layer 41 of PM between electrode pairs 13 by the voltage Vs applied between the electrode pairs 13. A microscopic luminescent discharge 42 arises randomly in time and space in the accumulated layer 41 of PM by the irregularity in the electric field resulting from a microscopic homogeneity of the accumulated layer 41 of PM. The PM is burned by joule heat of the microscopic luminescent discharge 42, and the insulating filter 12 is partially regenerated. And, because the burning of PM is a heat generation process, the PM surrounding the microscopic luminescent discharge 42 is also removed by the spreading of heat. If the exhaust gas temperature is high, the range of the spread of heat may extend comparatively wide.

And, by repeating the increase of the accumulated layer 41 of PM and the burning of PM via the generation of the microscopic luminescent discharge 42, a good PM purifying performance can be maintained, avoiding an excessive clogging of the insulting filter 12 and an excessive increase of the pressure loss of the filter.

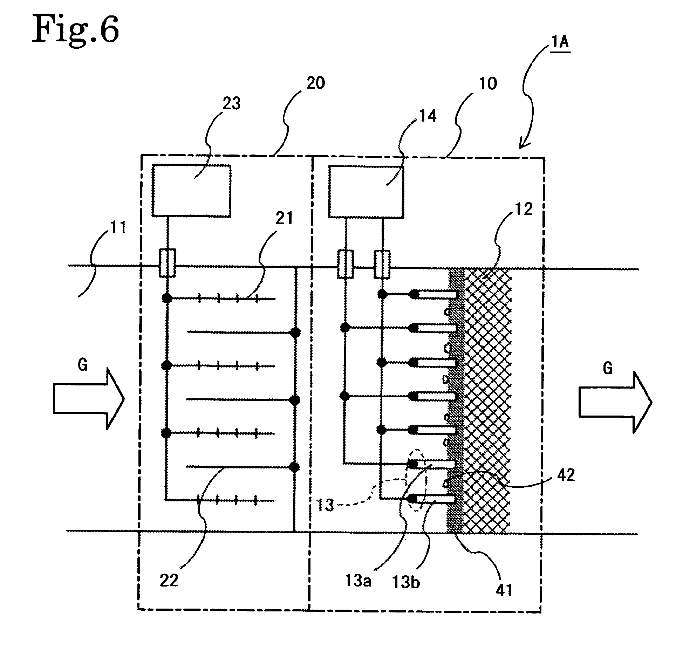

An exhaust gas purification system 1A of the second embodiment of the present invention is shown in Fig. 6. The exhaust gas purification system 1A is configured providing a charging part (charging means) 20 that charges PM in exhaust gas, on the upstream side of the filter 10 of the first embodiment. In Fig. 6, a corona discharge device, comprising of a primary discharging electrode 21, a secondary discharging electrode 22 for the generation of corona discharge, and a discharge power source 23 for the application of discharge voltage to the discharge electrodes 21, 22, is used as the charging part 20. The first discharging electrode 21 is an electrode of a high electrical field concentration factor, that is formed with a shape such as a pin-shape linear body or a linear-shaped one (wire-shaped) an the like, of thin electrode, coniform electrode, or an electrode in a protuberance form and the like, for example a SUS304, a code specified by JIS (Japanese Industrial Standards) for a type of austenitic stainless steel that contains 18% of Cr and 8% of Ni, hollow wire. The first discharging electrode 21 is connected to the discharge power source 23 that supplies high voltage electric power. And the second discharging electrode 22 is grounded, electrically insulted from the first discharging electrode 21 by an insulator and the like.

And generally a direct current voltage of negative polarity is applied to the first discharging electrode 21, however, a positive polarity is also possible. Any voltage such as direct current, alternating current, or pulse is applied so that a corona discharge is generated between both electrodes 21, 22, charging the PM in exhaust gas. In addition to a corona discharge, there are other charging means to be used to charge PM including, a barrier discharge, a pulse discharge, a radiation source, and an electron beam irradiation.

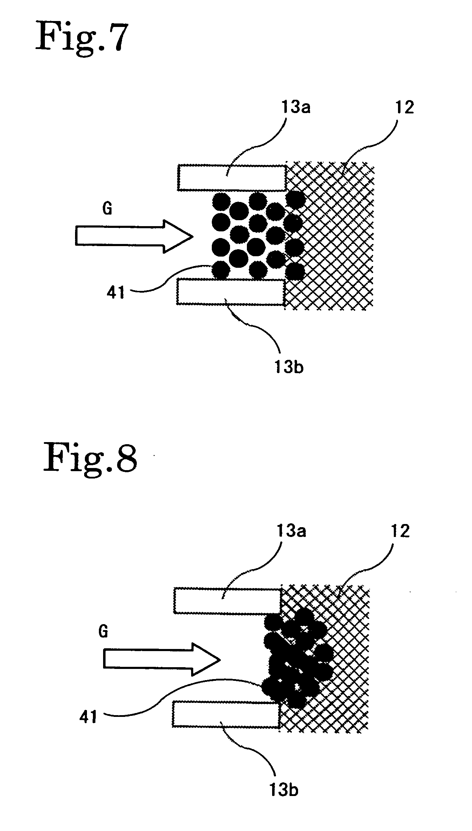

When the PM 41 is charged by the charging part 20 on the upstream side of the filter part 19, the accumulation state of PM on the surface of the insulating filter 12 changes. When PM in exhaust gas flowing into the insulating filter 12 is charged beforehand, as shown in the schematic view of Fig. 7, PM 41 is moderately dispersed on the surface of the insulating filter 12 maintaining the vacant space from one another due to an electrostatic repulsion. And PM 41 accumulates by adhering lightly in a cloud-like fashion, staying on the surface. Because the pressure loss decreases by the dispersing adhesion, the increase of the pressure loss of the insulting filter 12 can be avoided, and the electric resistance between the electrode pairs 13 can be maintained to be high. And because PM 41 disperses in the vicinity of the surface of the insulting filter 12 and is captured, the PM 41 can be effectively removed through burning by microscopic luminescent discharge 42 generated between the electrode pairs 13. As a result, the electric power for the microscopic luminescent discharge necessary to dissolve clogging in the insulating filter 12 can be reduced.

On the other hand, if charging does not occur, as shown in the schematic view of Fig. 8, the PM 41 adheres in a glob-like fashion, does not stay on the surface, and accumulates deep within the insulating filter 12. Compared with the dispersed adhesion in Fig. 7, by this firm adhesion, the pressure loss increases and the electric resistance decreases.

By the PM charging at the charging part 20, PM 41 is effectively captured in the insulating filter 12 by electrostatic force that is a suction force with an induction charge. Therefore, extremely small particulates can be captured, and particularly capturing performance of nanosized particulates improves remarkably. Additionally, even if the pressure change and the oscillation of the engine is transitionally fluctuated, because the PM 41 is securely captured on the insulating filter 12 by electrostatic force, it will not leak out to the downstream.

Next, An exhaust gas purification system of the third embodiment related to the present invention will be explained. The exhaust gas purification system of the third embodiment is the system that is provided an oxidation catalyst formed of noble metal such as platinum or vanadium to the same system as the exhaust gas purification system 1 of the first embodiment, or the exhaust gas purification system 1A of the second embodiment. Using this oxidation catalyst, soluble organic components and hydrocarbons HC that are vaporizing in exhaust gas and cannot be sufficiently removed by the insulating filter 12, are oxidized and removed by the oxidation catalytic effect, and exhaust gas purifying performance can be improved even more.

And as for the arrangement of the oxidation catalyst, in accordance with the following way of thinking, the arrangement of the oxidation catalyst and a ceramic filter may be variously selected according to engine type and driving condition. The electrical resistance R of the PM 41 accumulated in the insulating filter 12, is influenced by SOF component in exhaust gas. When the amount of SOF component is large, the electric resistance R of PM 41 increases. Therefore, if the electric resistance R of PM 41 discharged from an engine is comparatively large, the electric resistance R of PM 41 collected on the insulating filter 12 is reduced, and it is preferable for the voltage Vc applied to the electrode pairs 13 to be comparatively low. Accordingly, it is preferable for the oxidation catalyst converter to be arranged on the upstream side. On the other hand, if the electrical resistance R of PM 41 discharged from an engine is comparatively low and the voltage Vs applied between the electrodes 13 cannot be raised, then it is preferable to arrange the oxidation catalyst converter on the downstream side so that SOF components are removed on the downstream side and not the upstream side of the insulating filter 12.

Specifically, the arrangement of the oxidation catalyst is as follows. First, in the first embodiment, there is a configuration wherein the oxidation catalyst is carried on the insulating filter 12 provided with the electrode pairs 13. There are two cases in the first embodiment. In the first case, the oxidation catalyst converter carrying the oxidation catalyst is arranged on the upstream side of the insulating filter 12 provided with the electrode pairs 13, and in the second case, the oxidation catalyst is arranged on the downstream side of the insulating filter 12. And in the second embodiment, there is a configuration wherein the oxidation catalyst is carried on the insulating filter 12 provided with the electrode pairs 13. Additionally, in the second embodiment, the oxidation catalyst converter carried the oxidation catalyst mat be arranged on the upstream side of the charging part 20, or between the insulating filter 12 and the charging part 20, or on the downstream side of the insulating filter 12.

And if the oxidation catalyst is dispersed and carried on the insulating filter 12, then SOF components and HC components in the exhaust gas can be used as an auxiliary member for PM combustion, and PM can be removed by burning more effectively. Additionally, even if the oxidation catalyst converter is arranged, the oxidation catalyst may be carried on the insulating filter 12 provided with electrode pairs 13.

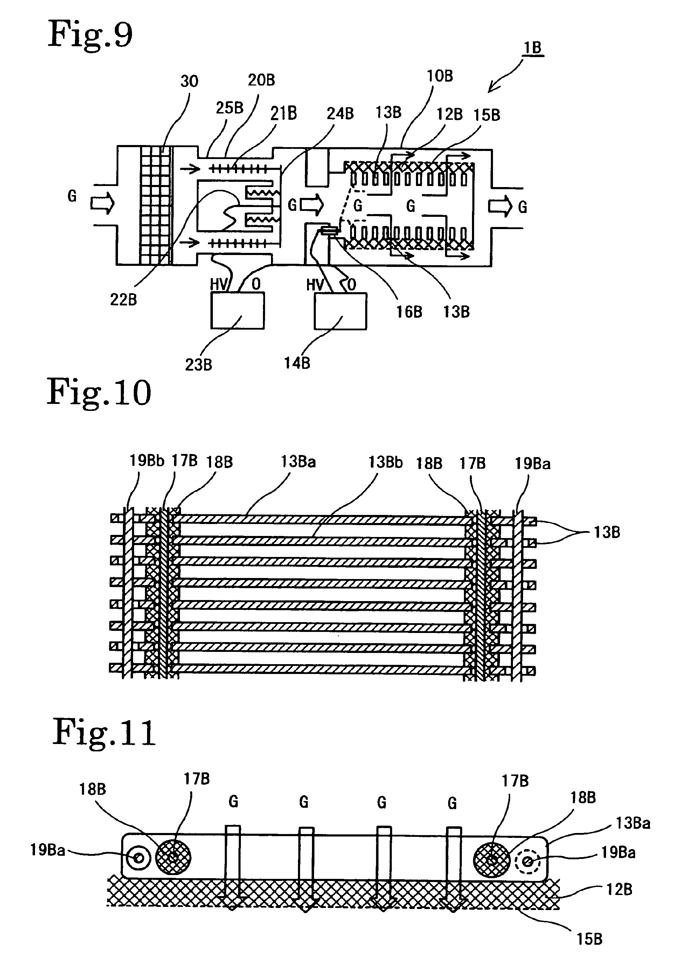

As examples of the exhaust gas purification system of the third embodiment, the exhaust purification system 1B and the exhaust purification system 1C, each of which the oxidation catalyst converter 30 is arranged on the upstream side of charging part 20B, are shown in Fig. 9 to Fig. 11 and Fig. 12 to Fig. 14. In the exhaust gas purification system 1B shown in Fig. 9 to Fig. 11, the oxidation catalyst converter 30, the charging part 20B and the filter part 10B are arranged in order from the upstream side.

The oxidation catalyst converter 30 is formed wherein a carrier of honeycomb structure of porous ceramic such as cordierite or SiC is provided with a catalyst coat layer of aluminum oxide and the like, and catalyst metal such as platinum or vanadium is carried on the catalyst coat layer.

And the charging part 20B is formed with corona discharge electrodes (first discharge electrode) 21B that are arranged respectively in multiple coaxial corona discharge tubes 25B. It is formed so that electric power with any type of high voltage including alternating current, direct current, or pulse shape of either negative polarity or positive polarity can be supplied from corona discharge electrode 23B to each corona discharge electrode 21B via the high voltage terminal 22B and the high voltage electric supply plate 24B. On the other hand, the coaxial corona discharge tubes 25B functions as the second discharge electrode, and are connected to the 0 V side of high voltage power source 23B. A corona discharge is generated between the corona discharge electrode 21B and coaxial corona discharge tubes 25B, electrifying PM in exhaust gas passing through.

And the filter part 10B is configured wherein insulating filter 12B is arranged in a cylinder on the inside (upstream side) of a filter holding plate 15B of permeable plate, so that the PM in exhaust gas G flowing from the inside to the outside is captured on the inside surface. Additionally, electrode pairs 13B are arranged on the inside surface or in the vicinity of the inside surface. In this example, the configuration is that wherein exhaust gas G flows form the inside to the outside. However, with the outside being the upstream side, the configuration is possible that wherein exhaust gas G flows form the outside to the inside, the insulating filter is arranged on the outside of the filter holding plate, and the electrode pairs are arranged on the outside of the insulating filter.

The electrode pairs 13, as shown in Fig. 10 and Fig. 11, supported by insulator 18B fixed to central pin 17B, are configured so that electric power is supplied from high voltage HV side of the microscopic luminescent discharge power source 14B to the primary electrode pair 13Ba via the high voltage terminal 16B and the electric potential fixed pin 19Ba. On the other hand, the secondary electrode pair 13Bb is connected to 0 V side of the high voltage power source 14B via the electric potential fixed pin 19Ba.

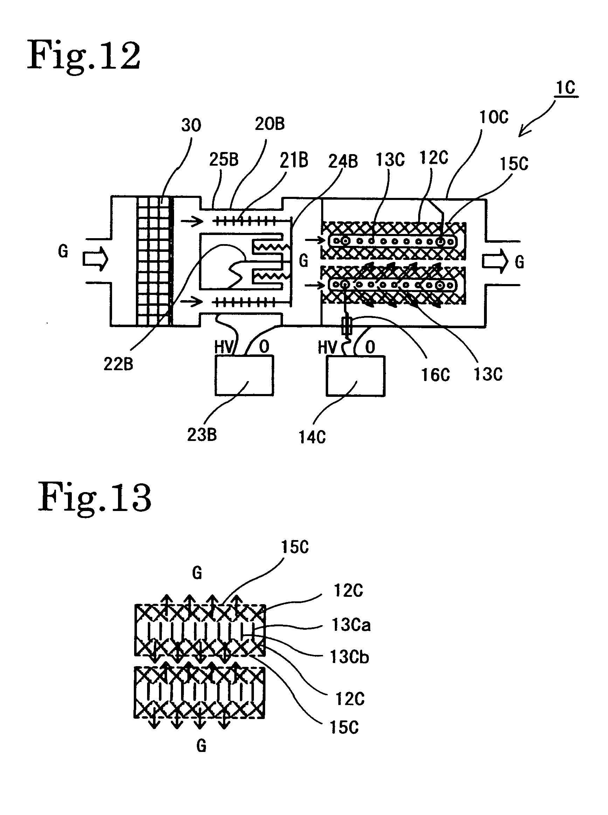

The oxidation catalyst converter 30, the charging part 20B, and the filter part 10C are arranged in order from upstream in the exhaust gas purification system 1C shown in Fig. 12 to Fig. 15. The oxidation catalyst converter 30 and the charging part 20 are the same as those of the exhaust gas purification system 1B.

And the filter part 10C is configured wherein the plate shape insulating filter 12C is arranged on both sides of the slender electrode pairs 13C positioned in the direction of the flow of the exhaust gas G, and the exhaust gas G flowing between the electrode pairs 13C passes through the insulating filter 12C from the inside to the outside of the electrode pairs 13C side, so that PM in the exhaust gas G is captured. And, a permeable filter holding plate 15C is arranged on the outside of the insulating filter 12C, supporting of the insulating filter 12C. Based on this structure, the electrode pairs 13C are arranged on or in the vicinity of the surface of the capturing side of the insulating filter 12C. Fig. 12 and Fig. 13 show the state wherein two units formed by the electrode pairs 13C and the insulating filter 12C of both sides of it is arranged above and below.

And the electrode pairs 13C, as shown in Fig. 14 and Fig. 15, supported by the insulator 18C fixed to the central pin 17C, are configured so that electric power from high voltage HV side of the microscopic luminescent discharge power source 14C is supplied to the primary electrode pair 13Ca via the high voltage terminal 16C and the electric potential fixed pin 19Ca. On the other hand, the secondary electrode pair 13Cb is connected to the 0 V side of the microscopic luminescent discharge power source 14C via the electric potential fixed pin 19Cb. Additionally, it is possible to provide a vent 13Cc in order to improve the uniformity of the flow of the exhaust gas flowing to the filter surface in the electrode pairs 13C, in other words, in the primary electrode pair 13Ca and the secondary electrode pair 13Cb, or in order to reduce the weight of the electrodes.

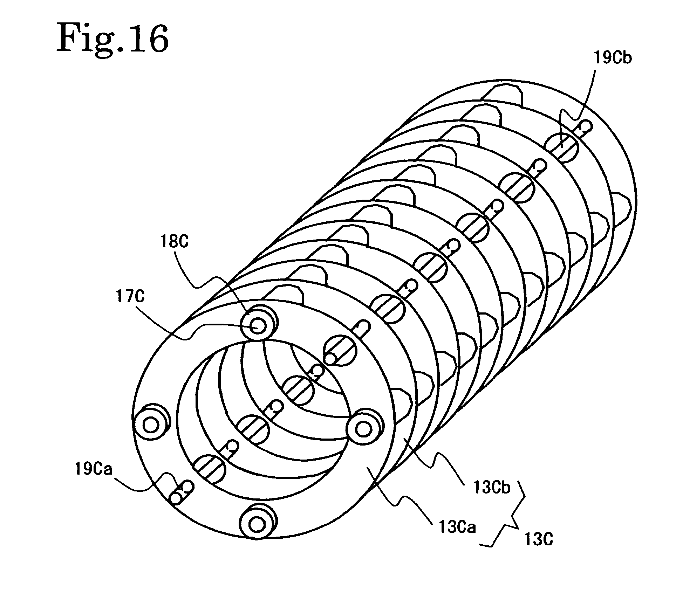

And as a modified example of the configuration of the insulating filter 12C and the electrode pairs 13C, it is possible to arrange the insulating filter 12C on the upstream side of the cylindrical filter holding plate 15C with a permeable cylinder and the like and arrange the electrode pairs 13 as shown in Fig. 16 on the upstream side of the insulting filter 12C. When the inside of the cylinder is taken as the upstream side, the electric pairs 13C as shown in Fig. 16 should be arranged on the inside of the insulating filter 12C, and when the outside of the cylinder is taken as the upstream side, the electric pairs 13C as shown in Fig. 16 should be arranged on the outside of the insulating filter 12C. And in order to facilitate weight reduction, and preserve uniformity of gas, the electric pairs 13C may also be made permeable if appropriate.

According to the exhaust gas purification system 1B, 1C, etc. of the third embodiment wherein oxidation catalyst is used, HC and SOF of PM in exhaust gas that cannot be sufficiently removed by the insulating filter 12, 12B, 12C, can be removed through oxidizing by the catalysis reaction of the oxidation catalyst, and the capability of the gas purification can be improved even more.

### Example 1

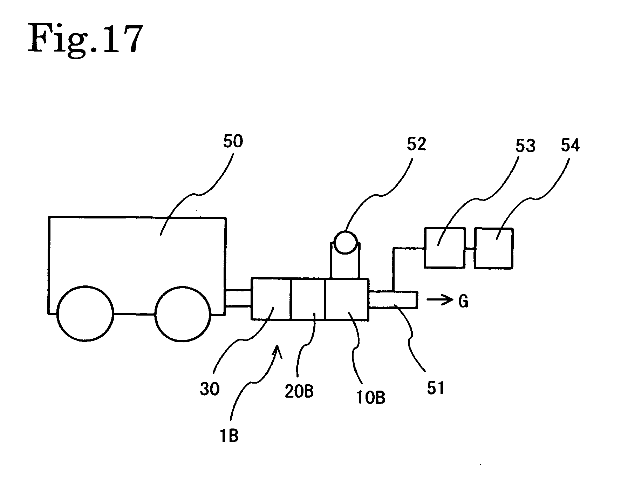

Next, the experiment for the gas purification that was conducted using exhaust gas purification system 1B, 1C of the third embodiment will be explained. Fig. 17 is an illustration showing a schematic view of the configuration of the experimental device. In Example 1, the exhaust gas purification system 1B was arranged in the exhaust passage 51 of a 2 ton truck 50 with a 4300 cc displacement diesel engine. In order to measure the differential pressure between the front and the back of the ceramic filter 12B, a differential pressure sensor 52 was provided, and in addition, in order to measure the exhaust gas components that diverged from exhaust passage 51, a dilution apparatus 53 and a particulate measuring apparatus 54 were provided.

It is configured with an oxidation catalyst 30, a charging part 20B for a corona discharge, and a filter part 10B in order from the upstream side. The oxidation catalyst 30 is formed carrying platinum on a ceramic honeycomb. The charging part 20 is that of a coaxial cylinder style wherein eight coaxial corona discharge tubes 25B (Fig. 9) with a diameter of roughly 60 mm and an effective discharge length of 80 mm are arranged parallel to each other. The filter part 10B is provided with a ceramic filter 12 of ceramic fiber with a bulk density of roughly 130 kg/m³, a thickness of 12 mm and a gas passage surface area of 1200 cm². The electrode pair 13B (Fig. 10, Fig. 11) that is an electrode plate thickness of 0.5 mm to 2 mm and having a distance between the electrodes of 6 mm to 25 mm is arranged on the upstream side of the gas passage surface of the ceramic filter 12B. Yet, for experiments, the sizes for the electrode plate thickness and the distance between electrodes have been appropriately selected those sizes within the above-mentioned ranges.

And the truck 50 was run continuously at 2000 rpm in engine speed, and the whole quantity of exhaust gas flowed into the experimental device of the exhaust gas purification system 1B while running. At the same time, a voltage of 0.5 kV to 2.5 kV in direct current, or 400 V to 1 kV (peak value is ±560 V to ±1.4 kV) in alternating current was applied. At that time, the time series of the change of the pressure loss of the ceramic fiber 12B was measured by a differential pressure gauge 52. And the exhaust gas that passed through the ceramic filter 12B, the measurement of the particulate quantity based on filter paper and the measurement of the particulate concentration based on the particulate measuring apparatus was carried out

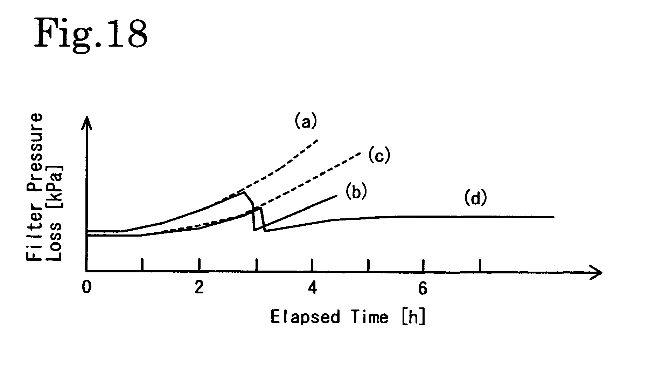

One example of the result of this experiment is shown in Fig. 18. In (a) and (b) there is no electrifying process of PM on the upstream side, while in (c) and (d) there is electrifying process of PM on the upstream side; in (a) and (c) there is no microscopic luminescent discharge voltage applied, while in (b) and (d) there is microscopic luminescent discharge voltage applied.

Upon examining the results of the microscopic luminescent discharge, as shown in (a) to (d), in the beginning, in other words, until the accumulated amount of PM between the electrode pairs progresses to a certain extent and the electrical current of the microscopic luminescent discharge begins to flow, the pressure loss of the filter increases according to elapse of time. And in (a) and (c) wherein the microscopic luminescent discharge voltage is not applied, the pressure loss continues to increase. On the other hand, in (b) and (d) wherein the microscopic luminescent discharge voltage is applied, the accumulated amount of PM between the electrode pairs reaches a certain amount and when the electrical current of the microscopic luminescent discharge begins to flow, the microscopic luminescent discharge is generated, removing PM by burning and the pressure loss begins to decrease.

And upon examining the results of electrifying process, to (a) and (b) without electrifying process, as (c) and (d) with electrifying process, if PM is electrified beforehand, the increase of the pressure loss slows down, and the characteristics of the combustion-removal of PM by the microscopic luminescent discharge is improved. Because it is shown that the pressure loss becomes almost consistent especially in (d), it is known that PM accumulated in the filter has been completely eliminated through burning by the microscopic luminescent discharge.

In Example 1, the electrical resistance R between the electrode pairs at the beginning of the experiment was nearly insulated, of at least above several dozens of MΩ. However, the PM accumulates and as the pressure loss gradually increases, the electrical resistance R declines, a microscopic luminescent discharge begins and at the point of time when the pressure loss begins to decline, the electrical resistance R declines to around several kΩ to several dozens of kΩ. The electric current flowing between the electrode pairs is of the order of 0.1 A to several A. Also the power necessary for the microscopic luminescent discharge was at least 500 W in (b) but 250 W or less in (d). And based on this, it was found that the electrification of PM beforehand results in a significant reduction of power consumption. Yet in (d) the combustion-removal of PM had a removal rate of 92 % in weight.

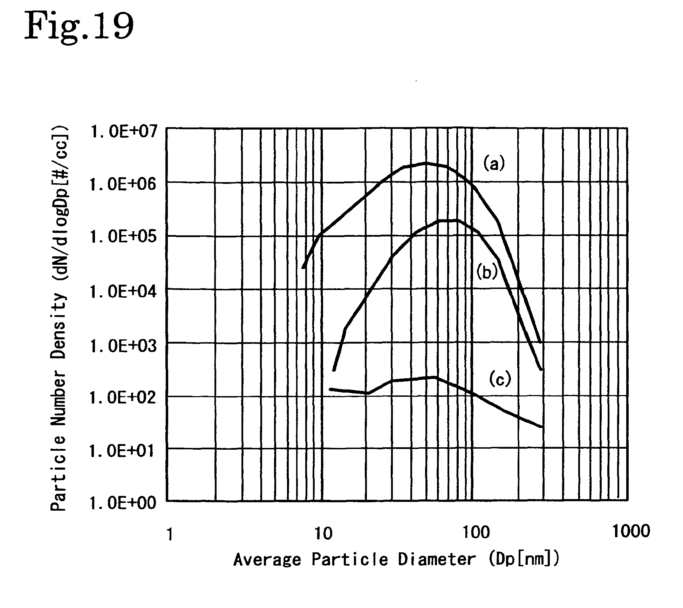

And Fig. 19 shows the results of the measuring the particles size distribution of PM in exhaust gas. After diluting the exhaust gas by 30 times using a dilution apparatus (Matter Engineering, Inc: MD19-2E) once, the particles size distribution was measured using a particulate measuring apparatus (SMPS available from TSI, Inc.: Scanning Mobility Particle Size r: 3936-L10).

(a) is the measurement result at the device inlet, (b) and (c) is the measurement results at the device outlet. And (b) is that of a microscopic luminescent discharge without a charging process, while (c) is that of a microscopic luminescent discharge with a charging process. It was found that compared to (a), both (b) and (c) have a low particulate density, and the PM had been removed through burning by the microscopic luminescent discharge. Also, from a comparison of (b) and (c) together, it is seen that when the charging process is conducted beforehand, such an extremely high purifying capability can be gained by which the obtainable particles include nanosize ones of a particle diameter smaller than 100 nm.

### Example 2

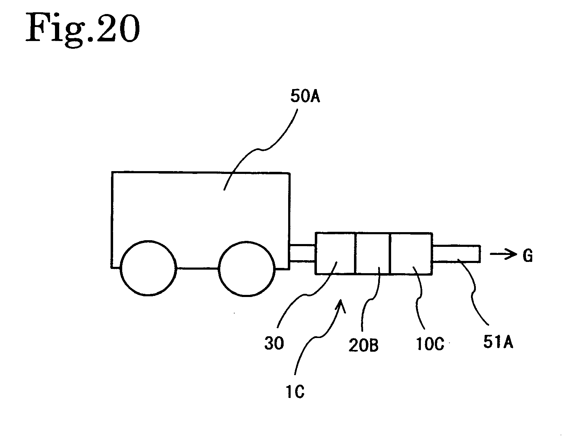

Fig. 20 shows a schematic view of the experimental device configuration of Example 2. In Example 2, the exhaust gas purification system 1C, as shown in Fig. 12 to Fig. 15, was arranged on the exhaust passage 51A of a truck 50A with a 5000 cc engine. The test mode was a JEO5 transient mode which is a Japanese emission test standard for heavy duty vehicles of gross vehicle weight (GVW) above 3.5 ton.

The exhaust gas purification system 1C was configured in order from the upstream side with an oxidation catalyst 30, charging means 20B by corona discharge, and ceramic filters 12C. The oxidation catalyst 30 carries platinum on a filter honeycomb. The charging means 20B is that of a coaxial cylinder style wherein eight coaxial corona discharge tubes 25B (Fig. 12) with a diameter of roughly 60 mm and effective discharge length of 80 mm are arranged parallel to each other. The ceramic filter 12C is formed with bulk density of roughly 130 kg/m³, a thickness of 24 mm and ceramic fiber with a gas passage surface area of 2000 cm². On the upstream side of gas passage surface of ceramic filter 12C, electrode pairs are arranged wherein the thickness of the electrode plate is 0.5 mm to 2 mm, the distance between the electrodes is 6 mm to 25 mm. Yet the sizes of the electrode plate thickness and the distance between electrodes have been appropriately selected sizes within the above-mentioned ranges for this experiment.

In Example 2, in order for the exhaust gas to flow well, and to achieve weight reduction, electrodes 13a, 13Cb are provided with a vent 13Cc. Also, when the contact between the electrode pairs 13C and the ceramic filter 12C worsen, it becomes difficult to generate a microscopic luminescent discharge. So, sufficient pressure has been used to press the electrode pairs 13C and the ceramic filter 12C together.

And while driving a truck 50A, the PM purifying capability was measured while the whole quantity of exhaust gas flows through the exhaust gas purification system 1C and alternating current voltage of 0 kV to 1 kV (with a peak value of 0 kV to ±1.4 kV) is applied. Based on the results of this measurement, it was found that the exhaust quantity reached 0.01 g/kWh or less, and the PM removal rate reached at least 90 %.

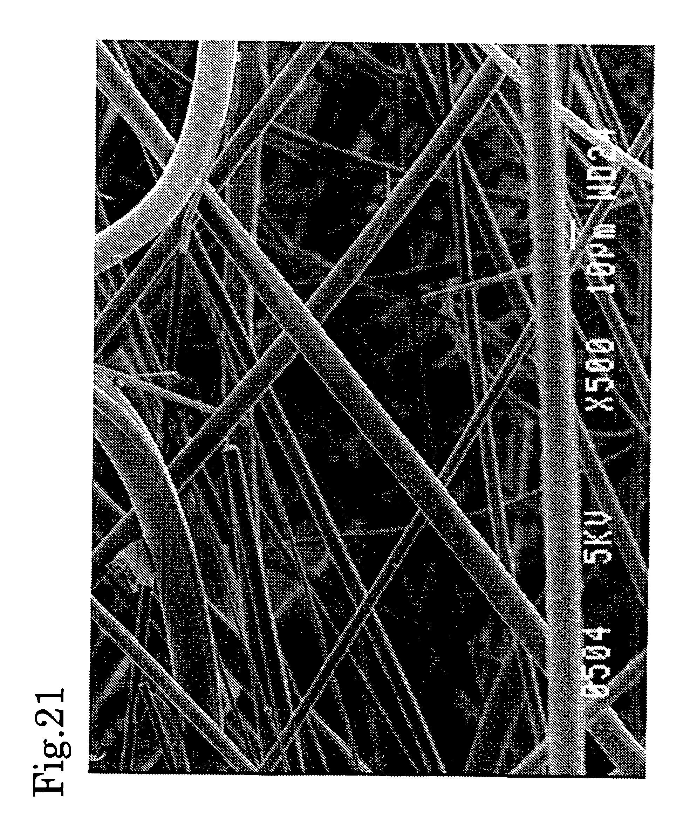

In these examples, a ceramic fiber filter was used as an insulating filter; however, the fiber filter was effective if the fiber diameter was at least 3 micrometer (µm), and it was found that the PM removal capability was particularly favorable when the fiber diameter was at least 5 micrometer (µ m) as shown particularly in Fig. 21.

### INDUSTRIAL APPLICABILITY

The present invention can remove captured PM through burning with a minimum power consumption using microscopic luminescent discharge that repeats generation and extinction randomly in time and space on the surface of an insulating filter, and because it can enhance the capturing efficiency and combustion-removal efficiency of PM in exhaust gas from diesel engines or the like, it can be used as an extremely effective exhaust gas purification method and exhaust gas purification system for exhaust gas of automobiles with internal combustion engines and the like.

## Claims

1. An exhaust gas purification method **characterized in that**
arranging at least one electrode pair (13, 13C) on the surface or in the vicinity of the surface of an insulating capturing member (12) that captures particulate matter in exhaust gas;
applying, between the electrode pair (13), a predetermined voltage that generates a microscopic luminescent discharge (42) that repeats generation and extinction randomly in time and space on the surface of the insulating capturing member (12) according as the accumulated amount of the particulate matter (41) captured on the surface of the insulating capturing member (12) increases; and
removing the particulate matter (41) captured in the insulating capturing member (12) through burning by the microscopic luminescent discharge (42) that was generated by the application of a predetermined voltage

2. The exhaust gas purification method according to Claim 1, **characterized in that** the insulating capturing member (12) is an insulating filter(12) through which exhaust gas including particulate matter (41) passes and which captures particulate matter (41).

3. An exhaust gas purification system (1) comprising:
an insulating capturing member (12) that captures particulate (41) matter in exhaust gas;
at least one electrode pair (13) arranged on the surface or in the vicinity of the surface of the insulating capturing member (12); and
a voltage applying device that applies a predetermined voltage between the electrode pair (13), **characterized in that**
a voltage applying device applies a predetermined voltage such that, when the amount of particulate matter (41) accumulated on the surface of the insulating capturing member (12) is equal to, or smaller than the predetermined amount, electric current does not flow between the electrode pairs (13), and when the amount of particulate matter (41) on the surface of the insulating capturing member (12) is larger than the predetermined amount, electric current flows between the electrode pairs (13).

4. The exhaust gas purification system (1) according to Claim 3, **characterized in that** the insulating capturing member (12) is an insulating filter(12) through which exhaust gas (G) including particulate matter (41) passes and which captures particulate matter (41).

5. The exhaust gas purification system (1) according to Claim 3 or 4, **characterized in that** the predetermined voltage is a voltage in the area where the relation of electrical current and voltage between the electrodes is in non-linear.

6. The exhaust gas purification system (1) according to any one of Claims 3 to 5, **characterized in that** the charging means(20), which charges particulate matter (41) in exhaust gas (G), is arranged on the upstream side of the insulating capturing member (12).

7. The exhaust gas purification system(1) according to any one of Claims 4 to 6, **characterized in that** the insulating capturing member (12) is formed with a ceramic fiber filter.

8. The exhaust gas purification system (1) according to any one of Claims 3 to 7, **characterized in that** the insulating capturing member (12) carries an oxidation catalyst (30).

9. The exhaust gas purification system (1) according to any one of Claims 3 to 8, **characterized in that** the oxidation catalyst (30) is arranged on the upstream side or downstream side of the insulating capturing member (12).

## Patentansprüche

1. Abgasreinigungsverfahren, **dadurch gekennzeichnet, dass**
mindestens ein Elektrodenpaar (13, 13C) auf der Oberfläche oder nahe der Oberfläche eines isolierenden Erfassungselementes (12), welches Feinstaub in einem Abgas erfasst, angeordnet wird,
zwischen dem Elektrodenpaar (13) eine vorbestimmte Spannung angelegt wird, welche eine mikroskopische lumineszierende Entladung (42) auslöst, welche zeitlich und örtlich zufällig auf der Oberfläche des isolierenden Erfassungselementes (12) wiederholt, erzeugt und gelöscht wird, während die gesammelte Menge an Feinstaub (41), die auf der Oberfläche des isolierenden Erfassungselementes (12) erfasst wurde, sich erhöht, und
der Feinstaub (41), der in dem isolierenden Erfassungselement (12) erfasst wurde, entfernt wird durch Verbrennen durch die mikroskopische lumineszierende Entladung (42), die durch das Anlegen einer vorbestimmten Spannung erzeugt wurde.

2. Abgasreinigungsverfahren nach Anspruch 1, **dadurch gekennzeichnet, dass** das isolierende Erfassungselement (12) ein isolierender Filter (12) ist, durch welchen Abgas, welches Feinstaub enthält, hindurchtritt und welcher Feinstaub (41) erfasst.

3. Abgasreinigungssystem (1), welches aufweist:
ein isolierendes Erfassungselement (12), welches Feinstaub (41) in einem Abgas erfasst,
mindestens ein Elektrodenpaar (13), welches auf der Oberfläche oder nahe der Oberfläche des isolierenden Erfassungselements (12) angeordnet ist, und
eine Spannungsanlageeinrichtung, die eine vorbestimmte Spannung zwischen dem Elektrodenpaar (13) anlegt, **dadurch gekennzeichnet, dass**
eine Spannungsanlageeinrichtung eine vorbestimmte Spannung anlegt, sodass, wenn die Menge an Feinstaub (41), die auf der Oberfläche des isolierenden Erfassungselementes (12) gesammelt wurde, gleich oder kleiner der vorbestimmten Menge ist, kein elektrischer Strom zwischen den Elektrodenpaaren (13) fließt, und, wenn die Menge an Feinstaub (41) auf der Oberfläche des isolierenden Erfassungselementes (12) größer ist als die vorbestimmte Menge, elektrischer Strom zwischen den Elektrodenpaaren (13) fließt.

4. Abgasreinigungssystem (1) nach Anspruch 3, **dadurch gekennzeichnet, dass** das isolierende Erfassungselement (12) ein isolierender Filter (12) ist, durch welchen Abgas (G), welches Feinstaub (41) enthält, hindurchtritt und welcher Feinstaub (41) erfasst.

5. Abgasreinigungssystem (1) nach einem der Ansprüche 3 oder 4, **dadurch gekennzeichnet, dass** die vorbestimmte Spannung eine Spannung in dem Bereich ist, in dem das Verhältnis von elektrischem Strom und Spannung zwischen den Elektroden nicht linear ist.

6. Abgasreinigungssystem (1) nach einem der Ansprüche 3 bis 5, **dadurch gekennzeichnet, dass** die Fördereinrichtung (20), die Feinstaub (41) in das Abgas (G) fördert, auf der aufstromigen Seite des isolierenden Erfassungselementes (12) angeordnet ist.

7. Abgasreinigungssystem (1) nach einem der Ansprüche 4 bis 6, **dadurch gekennzeichnet, dass** das isolierende Erfassungselement (12) durch einen keramischen Faserfilter gebildet wird.

8. Abgasreinigungssystem (1) nach einem der Ansprüche 3 bis 7, **dadurch gekennzeichnet, dass** das isolierende Erfassungselement (12) einen Oxidationskatalysator (30) trägt.

9. Abgasreinigungssystem (1) nach einem der Ansprüche 3 bis 8, **dadurch gekennzeichnet, dass** der Oxidationskatalysator (30) auf der aufstromigen oder abstromigen Seite des isolierenden Erfassungselementes (12) angeordnet ist.

## Revendications

1. Une méthode de purification de gaz d'échappement **caractérisée par** le fait
d'arranger au moins une paire d'électrodes (13, 13C) sur la surface ou au voisinage de la surface d'un élément de capture isolant (12) qui capture de la matière particulaire dans du gaz d'échappement ;
d'appliquer une tension prédéterminée entre la paire d'électrodes (13), générant une décharge luminescente microscopique (42) qui réitère génération et extinction de façon aléatoire dans le temps et dans l'espace sur la surface de l'élément de capture isolant (12) en fonction de l'augmentation de la quantité accumulée de la matière particulaire (41) capturée sur la surface de l'élément de capture isolant (12) ; et
de retirer la matière particulaire (41) capturée dans l'élément de capture isolant (12) en la brûlant par la décharge luminescente microscopique (42) générée par l'application d'une tension prédéterminée.

2. La méthode de purification de gaz d'échappement selon la revendication 1,
**caractérisée en ce que** l'élément de capture isolant (12) est un filtre isolant (12) au travers duquel passe du gaz d'échappement comportant de la matière particulaire (41) et qui capture de la matière particulaire (41).

3. Un système de purification de gaz d'échappement (1) comprenant :
un élément de capture isolant (12) qui capture de la matière particulaire (41) dans du gaz d'échappement ;
au moins une paire d'électrodes (13) arrangées sur la surface ou au voisinage de la surface de l'élément de capture isolant (12) ; et
un dispositif pour appliquer une tension qui applique une tension prédéterminée entre la paire d'électrodes (13), **caractérisé en ce que**
un dispositif pour appliquer une tension applique une tension prédéterminée de telle façon que, lorsque la quantité de matière particulaire (41) accumulée sur la surface de l'élément de capture isolant (12) est égale ou inférieure à la quantité prédéterminée, un courant électrique ne passe pas entre les paires d'électrodes (13), et lorsque la quantité de matière particulaire (41) sur la surface de l'élément de capture isolant (12) est supérieure à la quantité prédéterminée, un courant électrique passe entre les paires d'électrodes (13).

4. Le système de purification de gaz d'échappement (1) selon la revendication 3, **caractérisé en ce que** l'élément de capture isolant (12) est un filtre isolant (12) au travers duquel passe du gaz d'échappement (G) comportant de la matière particulaire (41) et qui capture de la matière particulaire (41).

5. Le système de purification de gaz d'échappement (1) selon la revendication 3 ou la revendication 4, **caractérisé en ce que** la tension prédéterminée est une tension dans la zone où la relation courant électrique / tension entre les électrodes est non-linéaire.

6. Le système de purification de gaz d'échappement (1) selon l'une quelconque des revendications 3 à 5, **caractérisé en ce que** le moyen de chargement (20), lequel charge de la matière particulaire (41) dans du gaz d'échappement (G), est arrangé sur le côté amont de l'élément de capture isolant (12).

7. Le système de purification de gaz d'échappement (1) selon l'une quelconque des revendications 4 à 6, **caractérisé en ce que** l'élément de capture isolant (12) est formé avec un filtre en fibre céramique.

8. Le système de purification de gaz d'échappement (1) selon l'une quelconque des revendications 3 à 7, **caractérisé en ce que** l'élément de capture isolant (12) porte un catalyseur d'oxydation (30).

9. Le système de purification de gaz d'échappement (1) selon l'une quelconque des revendications 3 à 8, **caractérisé en ce que** le catalyseur d'oxydation (30) est arrangé sur le côté amont ou le côté aval de l'élément de capture isolant (12).
